# EUROPEAN PATENT SPECIFICATION

(11) **EP 4 116 374 B1**
(45) Date of publication and mention of the grant of the patent: **18.06.2025**
(21) Application number: 22193385.6
(22) Date of filing: 07.09.2018
(51) Int. Cl.: C08L 27/12, C08K 5/14, C08L 71/00, C08L 83/07, C09K 3/10, C08K 5/5425, C08K 5/00

(54) **METHOD FOR MANUFACTURING A RUBBER PRODUCT**
VERFAHREN ZUR HERSTELLUNG VON KAUTSCHUKPRODUKTEN
PROCÉDÉ DE FABRICATION DE PRODUIT EN CAOUTCHOUC

(30) Priority: 14.09.2017 JP 2017176309
(43) Date of publication of application: 11.01.2023
(62) Divisional of application: 18856637.6
(73) Proprietor: Mitsubishi Cable Industries, Ltd., Chiyoda-ku Tokyo 100-8303 (JP)
(72) Inventor: YASUDA, Hiroaki, Amagasaki-shi Hyogo 660-0856 (JP); HAMAMURA, Takehiro, Amagasaki-shi Hyogo 660-0856 (JP); ITO, Takao, Amagasaki-shi Hyogo 660-0856 (JP)
(74) Representative: Germain Maureau

(56) References cited:
- EP-A1- 2 484 722
- JP-A- 2011 144 285
- JP-A- H04 359 950

## Description

### TECHNICAL FIELD

The present invention relates to a method for manufacturing a rubber product from uncrosslinked rubber compositions.

### BACKGROUND ART

Silicone rubber is known as a rubber component having high oxygen plasma resistance but slightly low fluorine plasma resistance. A vinylidene fluoride fluororubber (hereinafter referred to as "FKM") is known as a rubber component having high fluorine plasma resistance but slightly low oxygen plasma resistance. A tetrafluoroethyleneperfluorovinylether fluororubber (hereinafter referred to as "FFKM") is known as a rubber component that has high oxygen plasma resistance and high fluorine plasma resistance but is more expensive as compared to silicone rubber and FKM. It is therefore proposed to use a mixture of these rubber components. For example, Patent Document 1 discloses the use of a mixture of silicone rubber and FFKM and the use of a mixture of FKM and FFKM. Patent Document 2 discloses the use of a mixture of FKM and FFKM. Patent Document 3 discloses the use of a mixture of silicone rubber and FKM.

As a technique that increases plasma resistance, Patent Documents 4 and 5 disclose adding a reactive fluorine compound to FKM. Patent Document 6 discloses adding an excess of crosslinking aid to FKM, heating the FKM to crosslink the FKM by the crosslinking aid, and irradiating the FKM to further crosslink the FKM by the excess crosslinking aid, thereby increasing the crosslinking density and thus improving rubber's physical properties.

Document JP 2011 144285 A discloses a rubber composition obtained from a fluororubber. Document JP H04 359950 A discloses a vulcanizable rubber composition.

### CITATION LIST

### PATENT DOCUMENTS

PATENT DOCUMENT 1: Japanese Patent No. 4778782
PATENT DOCUMENT 2: Japanese Patent No. 4628814
PATENT DOCUMENT 3: Japanese Unexamined Patent Publication No. 2001-348462
PATENT DOCUMENT 4: Japanese Patent No. 4675907
PATENT DOCUMENT 5: Japanese Patent No. 5189728
PATENT DOCUMENT 6 : Japanese Patent No. 4381087

### SUMMARY OF THE INVENTION

The present invention relates to a method for manufacturing a rubber product in accordance with the appended set of claims.

### DESCRIPTION OF EMBODIMENTS

An embodiment will be described in detail below.

In the method of the invention, an uncrosslinked rubber composition is suitably used for manufacturing of rubber products, especially highly plasma resistant sealing materials such as an O-ring which are used for, e.g., systems using plasma such as a semiconductor etching system and a semiconductor plasma CVD system. The uncrosslinked rubber composition contains a hydrogen-containing fluororubber that is a rubber component, a thermal crosslinking agent, and a hydrogen site protective agent.

The "hydrogen-containing fluororubber" herein refers to a fluororubber that contains carbons bonded to hydrogens in its polymer main chain. It is preferable that the hydrogen-containing fluororubber contain, e.g., vinylidene fluoride (VDF), propylene (Pr), or ethylene (E), as a monomer.

Examples of the hydrogen-containing fluororubber include polymers (PVDF) of vinylidene fluoride (VDF), copolymers of vinylidene fluoride (VDF) and hexafluoropropylene (HFP), copolymers of vinylidene fluoride (VDF), hexafluoropropylene (HFP), and tetrafluoroethylene (TFE), copolymers (FEP) of tetrafluoroethylene (TFE) and propylene (Pr), copolymers of vinylidene fluoride (VDF), propylene (Pr), and tetrafluoroethylene (TFE), copolymers (ETFE) of ethylene (E) and tetrafluoroethylene (TFE), copolymers of ethylene (E), tetrafluoroethylene (TFE), and perfluoromethylvinylether (PMVE), copolymers of vinylidene fluoride (VDF), tetrafluoroethylene (TFE), and perfluoromethylvinylether (PMVE), and copolymers of vinylidene fluoride (VDF) and perfluoromethylvinylether (PMVE). It is preferable that the hydrogen-containing fluororubber contain one or more of these.

The thermal crosslinking agent is a compound that crosslinks the hydrogen-containing fluororubber when heated to a predetermined temperature. The thermal crosslinking agent is a peroxide. Examples of peroxides include 1,1-bis(t-butylperoxy)-3,5,5-trimethylcyclohexane, 2,5-dimethylhexane-2,5-dihydroperoxide, di-t-butylperoxide, t-butylcumylperoxide, dicumylperoxide, α,α-bis(t-butylperoxy)-p-diisopropylbenzene, 2,5-dimethyl-2,5-di(t-butylperoxy)hexane, 2,5-dimethyl-2,5-di(t-butylperoxy)-hexyne-3, benzoylperoxide, t-butylperoxybenzene, t-butylperoxymaleic acid, t-butylperoxy isopropyl carbonate, and t-butylperoxybenzoate. The thermal crosslinking agent preferably contains one or more of these and more preferably contains 2,5-dimethyl-2,5-di(t-butylperoxy)hexane. The content (A) of the thermal crosslinking agent is preferably 0.5 parts by mass or more and 2.5 parts by mass or less, and more preferably 0.5 parts by mass or more and 2.0 parts by mass or less, per 100 parts by mass of the hydrogen-containing fluororubber in order to cause crosslinking to proceed sufficiently and obtain satisfactory physical properties as a sealing material.

The hydrogen site protective agent is a compound that bonds to carbon radicals resulting from breakage of carbon-hydrogen bonds of the hydrogen-containing fluororubber which occurs under irradiation. The "hydrogen site" herein refers to the site of carbon bonded to hydrogen in the polymer main chain of the hydrogen-containing fluororubber. Specifically, the "hydrogen site" refers to, e.g., a C-H bond site in a VDF component. The hydrogen site protective agent contains a compound with a perfluoro skeleton having an alkenyl group that bonds to a carbon radical of the hydrogen-containing fluororubber in its molecule and a compound with a siloxane skeleton having an alkenyl group that bonds to a carbon radical of the hydrogen-containing fluororubber in its molecule.

Examples of the alkenyl group include a vinyl group, an allyl group, a butenyl group, a pentenyl group, a hexenyl group, and a heptenyl group. The alkenyl group is preferably a vinyl group.

Examples of the compound with a perfluoro skeleton having an alkenyl group in its molecule include compounds with a perfluoropolyether structure and compounds with a perfluoroalkylene structure.

Examples of the compound with a siloxane skeleton having an alkenyl group in its molecule include polymers of methylvinylsiloxane, polymers of dimethylsiloxane, copolymers of dimethylsiloxane and methylvinylsiloxane, and copolymers of dimethylsiloxane, methylvinylsiloxane, and methylphenylsiloxane. Other example includes organopolysiloxanes having an alkenyl group in its molecule which are addition-polymerized liquid silicone rubber.

It is preferable that the compound with a perfluoro skeleton and the compound with a siloxane skeleton have two or more alkenyl groups in its molecule. The two or more alkenyl groups may be the same or different from each other. The hydrogen site protective agent having two or more alkenyl groups not only protects hydrogen sites but also functions as a crosslinking aid that crosslink molecules of the hydrogen-containing fluororubber.

The hydrogen site protective agent preferably contains one or more of the above examples, more preferably contains a compound with a perfluoropolyether structure having an alkenyl group in its molecule, and even more preferably contains a compound with a perfluoropolyether structure having two or more alkenyl groups in its molecule.

It is preferable that the hydrogen site protective agent be a one-component liquid material. In that case, the viscosity of the hydrogen site protective agent at 23°C is preferably 30 Pa·s or more and 100 Pa·s or less and more preferably 40 Pa·s or more and 70 Pa·s or less in the case of the compound with a perfluoro skeleton, and is preferably 100 Pa·s or more and 150 Pa·s or less and more preferably 120 Pa·s or more and 140 Pa·s or less in the case of the compound with a siloxane skeleton.

The content (B) of the hydrogen site protective agent is preferably 1 part by mass or more and 20 parts by mass or less, and more preferably 5 parts by mass or more and 15 parts by mass or less, per 100 parts by mass of the hydrogen-containing fluororubber in order to increase plasma resistance. The content (B) of the hydrogen site protective agent is preferably higher than the content (A) of the thermal crosslinking agent in order to increase plasma resistance. The ratio (B/A) of the content (B) of the hydrogen site protective agent to the content (A) of the thermal crosslinking agent is preferably 2.5 or more and 30 or less, and more preferably 5.0 or more and 10 or less, in order to increase plasma resistance.

The uncrosslinked rubber composition may further contain a crosslinking aid. The crosslinking aid is a compound that bonds to the hydrogen-containing fluororubber so as to be located between molecules of the hydrogen-containing fluororubber when the hydrogen-containing fluororubber is crosslinked by the thermal crosslinking agent.

Examples of the crosslinking aid include triallyl cyanurate, trimethallyl isocyanurate, triallyl isocyanurate, triacrylformal, triallyl trimellitate, N,N'-m-phenylene bismaleimide, dipropargyl terephthalate, diallyl phthalate, tetraallyl terephthalate amide, triallyl phosphate, bismaleimide, fluorinated triallyl isocyanurate(1,3,5-tris(2,3,3-trifluoro-2-propenyl)-1,3,5-triazine-2,4,6-trione), tris(diallylamine)-S-triazine, triallyl phosphite, N,N-diallyl acrylamide, 1,6-divinyldodecafluorohexane, hexaallyl phosphoramide, N,N,N',N'-tetraallylphthalamide, N,N,N',N'-tetraallylmalonamide, trivinyl isocyanurate, 2,4,6-trivinylmethyltrisiloxane, tri(5-norbornene-2-methylene)cyanurate, and triallyl phosphite. The crosslinking aid preferably contains one or more of these and more preferably contains triallyl isocyanurate.

The content (C) of the crosslinking aid is preferably 1 part by mass or more and 10 parts by mass or less, and more preferably 2 parts by mass or more and 5 parts by mass or less, per 100 parts by mass of the hydrogen-containing fluororubber in order to obtain satisfactory physical properties as a sealing material. The content (C) of the crosslinking aid is preferably higher than the content (A) of the thermal crosslinking agent in order to increase plasma resistance. The ratio (C/A) of the content (C) of the crosslinking aid to the content (A) of the thermal crosslinking agent is preferably 1.0 or more and 4.0 or less, and more preferably 2.0 or more and 3.0 or less, in order to cause the crosslinking aid to react without excess or deficiency and obtain satisfactory physical properties as a sealing material.

The uncrosslinked rubber composition may contain a fluororubber that does not contain carbons bonded to hydrogens in its polymer main chain such as silicone rubber and a copolymer of tetrafluoroethylene and perfluorovinylether, which are rubber components other than the hydrogen-containing fluororubber, as long as the content of such a fluororubber is lower than that of the hydrogen-containing fluororubber. Depending on the rubber product to be manufactured, the uncrosslinked rubber composition may contain a reinforcing material such as carbon black and silica, a plasticizer, a processing aid, a vulcanization accelerator, or an anti-aging agent. However, when used to manufacture such a rubber product that generation of particles in a plasma atmosphere is a problem, the content of a powdered inorganic filler such as carbon black, silica, and a metal oxide is preferably 5 parts by mass or less, more preferably 3 parts by mass or less, and most preferably 0 parts by mass per 100 parts by mass of the hydrogen-containing fluororubber. A powdered organic filler such as hydrogen-containing fluororesin powder like PVDF or ETFE is expected to improve physical properties due to crosslinking with the hydrogen-containing fluororubber when irradiated as described below.

The uncrosslinked rubber composition can be manufactured using an open rubber kneading machine such as an open roll or a sealed rubber kneading machine such as a kneader.

Next, an embodiment of the method of the invention for manufacturing a rubber product using an uncrosslinked rubber composition will be described.

In the method for manufacturing a rubber product, a cavity of a preheated mold is first filled with a predetermined amount of uncrosslinked rubber composition, and the mold is then closed. Thereafter, the mold is kept in this state at a predetermined molding temperature and a predetermined molding pressure for a predetermined molding time. At this time, the uncrosslinked rubber composition is molded into the shape of the cavity and loses its plasticity due to crosslinking of the hydrogen-containing fluoroelastomer by the thermal crosslinking agent. This molding may be either press molding or injection molding. The molding temperature is, e.g., 150°C or higher and 180°C or less. The molding pressure is, e.g., 0.1 MPa or higher and 25 MPa or less. The molding time is, e.g., 3 minutes or more and 20 minutes or less.

The mold is then opened, and the molding is taken out of the mold and cooled. The molding is then irradiated. When irradiated, the carbon-hydrogen bonds at the hydrogen sites of the hydrogen-containing fluororubber are broken and carbon radicals are formed. The hydrogen site protective agent bonds to the carbon radicals. Examples of the radiation include α-rays, β-rays, γ-rays, electron beams, and ions. Among these, the radiation is preferably electron beams or γ-rays. In order to increase plasma resistance, the radiation dose is preferably 10 kGy or more and 100 kGy or less, and more preferably 30 kGy or more and 80 kGy or less.

A rubber product that is made of a rubber composition in which a hydrogen-containing fluororubber has been crosslinked by a thermal crosslinking agent and a hydrogen site protective agent has bonded to carbons resulting from breakage of carbon-hydrogen bonds of the hydrogen-containing fluororubber is thus produced using the uncrosslinked rubber composition.

According to the uncrosslinked rubber composition having the above configuration, the hydrogen sites of the hydrogen-containing fluororubber, which are sites with low plasma resistance, are protected as the hydrogen site protective agent bonds to carbon radicals resulting from breakage of the carbon-hydrogen bonds which occurs under irradiation. A rubber product with high plasma resistance can thus be manufactured using this uncrosslinked rubber composition. Since the hydrogen site protective agent reacts with hydrogen-containing fluororubber, bleedout will not occur.

### Examples

### (Rubber Composition)

Rubber compositions of Examples 1 and 2 and Comparative Examples 1 to 3 were prepared. The configurations of these rubber compositions are also shown in Table 1.

### <Example 1>

An uncrosslinked rubber composition was prepared by adding 1.5 parts by mass of 2,5-dimethyl-2,5-di(t-butylperoxy)hexane (PERHEXA 25B, made by NOF CORPORATION), which is a peroxide as a thermal crosslinking agent, 10 parts by mass of a compound with a perfluoro skeleton having a vinyl group in its molecule (SIFEL3590-N, made by Shin-Etsu Chemical Co., Ltd., viscosity (23°C): 50 Pa·s), which is a one-component liquid material as a hydrogen site protective agent, and 4 parts by mass of triallyl isocyanurate (TAIC, made by Nihon Kasei CO., LTD.) as a crosslinking aid to 100 parts by mass of a hydrogen-containing fluororubber made of a copolymer of vinylidene fluoride, hexafluoropropylene, and tetrafluoroethylene (DAI-EL G912, made by DAIKIN INDUSTRIES, LTD.) and kneading the mixture. Subsequently, the uncrosslinked rubber composition was press-molded at 165°C and 5 MPa for 15 minutes and then heat-treated at 200°C for 4 hours to produce a sheet-like rubber composition. The sheet-like rubber composition was irradiated with γ-rays at a dose of 30 kGy. Example 1 is the sheet-like rubber composition thus irradiated with γ-rays.

### <Example 2>

Example 2 is a sheet-like rubber composition produced in a manner similar to that of Example 1 except that a compound with a siloxane skeleton having a vinyl group in its molecule (KE-1830, made by Shin-Etsu Chemical Co., Ltd. Viscosity (23°C): 130 Pa·s), which is a one-component liquid material, was added as a hydrogen site protective agent.

### <Comparative Example 1>

Comparative Example 1 is a sheet-like rubber composition produced in a manner similar to that of Example 1 except that no hydrogen site protective agent was added.

### <Comparative Example 2>

Comparative Example 2 is a sheet-like rubber composition produced in a manner similar to that of Example 1 except that no hydrogen site protective agent was added and 20 parts by mass of silicone rubber (KE-941-U, made by Shin-Etsu Chemical Co., Ltd.) was added to 100 parts by mass of the hydrogen-containing fluororubber.

### <Comparative Example 3>

Comparative Example 3 is a sheet-like rubber composition produced in a manner similar to that of Example 1 except that no hydrogen site protective agent was added and 20 parts by mass of a copolymer of tetrafluoroethylene and perfluorovinylether (FFKM: AFLAS Premium PM1100, made by AGC Inc.) was added to 100 parts by mass of the hydrogen-containing fluororubber.

**[Table 1]**

| | | | Examples | | Comparative Examples | | |
|---|---|---|---|---|---|---|---|
| | | | 1 | 2 | 1 | 2 | 3 |
| Hydrogen-Containing Fluororubber | | | 100 | 100 | 100 | 100 | 100 |
| Crosslinking Agent (A) | | | 1.5 | 1.5 | 1.5 | 1.5 | 1.5 |
| Hydrogen Site Protective Agent 1 (B) | | | 10 | | | | |
| Hydrogen Site Protective Agent 2 (B) | | | | 10 | | | |
| Crosslinking Aid (C) | | | 4 | 4 | 4 | 4 | 4 |
| Silicone Rubber | | | | | | 20 | |
| FFKM | | | | | | | 20 |
| B/A | | | 6.7 | 6.7 | - | - | - |
| C/A | | | 2.7 | 2.7 | 2.7 | 2.7 | 2.7 |
| Plasma Resistance | O₂ | Mass Loss, mass% | 0.5 | 0.3 | 2.9 | 0.8 | 0.6 |
| | | Cracks | None | None | Yes | Yes | Yes |
| | | Particles | None | None | None | None | None |
| | CF₄ | Mass Loss, mass% | 0.2 | 0.1 | 0.2 | 1.2 | 0.1 |
| | | Cracks | None | None | None | Yes | None |
| | | Particles | None | None | None | None | None |
| Tensile Properties | M₁₀₀, MPa | | 2.0 | 2.2 | 2.1 | 1.5 | 1.7 |
| | TB, MPa | | 10.9 | 11.5 | 12.0 | 8.50 | 11.3 |
| | EB, % | | 250 | 200 | 200 | 250 | 190 |
| Compression Set, % | | | 39 | 35 | 28 | 47 | 41 |

### (Test Methods)

### <Plasma Resistance>

For each of Examples 1 and 2 and Comparative Examples 1 to 3, an O₂ plasma irradiation test and a CF₄ plasma irradiation test were performed using a microwave plasma generator at 10% elongation to check for mass loss, any cracks, and any particles. In the tests, O₂ and CF₄ were used as reactant gases. The flow rate of O₂ to CF₄ was 50 to 1 in the O₂ plasma irradiation test and was 1 to 50 in the CF₄ plasma irradiation test. The reaction pressure was 100 Pa and the plasma irradiation time was 60 minutes.

### <Tensile Properties>

For each of Examples 1 and 2 and Comparative Examples 1 to 3, a tensile test was performed based on JIS K 6251 to measure 100% modulus (M₁₀₀: tensile stress at 100% elongation), tensile strength (TB), and elongation at break (EB).

### <Compression Set>

For each of Examples 1 and 2 and Comparative Examples 1 to 3, compression set was measured based on JIS K 6262: 2013. The test time was 72 hours and the test temperature was 200°C.

### (Test Results)

### Table 1 shows the test results.

According to Table 1, Examples 1 and 2 using a hydrogen site protective agent have high resistance to both O₂ plasma and CF₄ plasma. With O₂ plasma irradiation, Comparative Examples 1 to 3 using no hydrogen site protective agent produced no particles but had great mass loss (especially Comparative Example 1) and developed cracks. Comparative Examples 1 to 3 have high resistance to CF₄ plasma. With CF₄ plasma irradiation, however, Comparative Example 2 produced no particles but had great mass loss and developed cracks. No significant difference in tensile properties and compression set was observed between Examples 1 and 2 and Comparative Examples 1 to 3.

### INDUSTRIAL APPLICABILITY

The present invention is useful in the technical field of methods for manufacturing a rubber product from uncrosslinked rubber compositions.

## Claims

1. A method for manufacturing a rubber product comprising:
- A) heating an uncrosslinked rubber composition containing:
a hydrogen-containing fluororubber;
a thermal crosslinking agent that crosslinks the hydrogen-containing fluororubber when heated to a predetermined temperature; wherein said thermal crosslinking agent is a peroxide; and
a hydrogen site protective agent that bonds to carbon radicals resulting from breakage of carbon-hydrogen bonds of the hydrogen-containing fluororubber which occurs under irradiation, wherein said hydrogen site protective agent contains a compound with a perfluoro skeleton having an alkenyl group that bonds to the carbon radical of the hydrogen-containing fluororubber in its molecule and a compound with a siloxane skeleton having an alkenyl group that bonds to a carbon radical of the hydrogen-containing fluororubber in its molecule, to said predetermined temperature to crosslink the hydrogen-containing fluororubber by the thermal crosslinking agent,
- B) irradiating the rubber composition obtained at step A) so that the hydrogen site protective agent bonds to the carbon radicals resulting from breakage of the carbon hydrogen bonds of the hydrogen containing fluororubber to obtain the rubber product.

2. The method of claim 1, wherein the content of the hydrogen site protective agent is 1 part by mass or more and 20 parts by mass or less per 100 parts by mass of the hydrogen-containing fluororubber.

3. The method of anyone of claims 1-2, wherein the thermal crosslinking agent contains 2,5-dimethyl-2,5-di(t-butylperoxy)hexane.

4. The method of anyone of claims 1-3, wherein the content of the thermal crosslinking agent is 0.5 parts by mass or more and 2.5 parts by mass or less per 100 parts by mass of the hydrogen-containing fluororubber.

5. The method of anyone of claims 1-4, wherein the ratio of the content of the hydrogen site protective agent to the content of the thermal crosslinking agent is 2.5 or more and 30 or less.

6. The method of anyone of claims 1-5, wherein the uncrosslinked rubber composition further contains:
a crosslinking aid that bonds to the hydrogen-containing fluororubber so as to be located between molecules of the hydrogen-containing fluororubber when the hydrogen-containing fluororubber is crosslinked by the thermal crosslinking agent.

7. The method of claim 6, wherein the crosslinking aid contains triallyl isocyanurate.

8. The method of claim 6 or 7, wherein the content of the crosslinking aid is 1 part by mass or more and 10 parts by mass or less per 100 parts by mass of the hydrogen-containing fluororubber.

## Patentansprüche

1. Verfahren zur Herstellung eines Kautschukprodukts, das Folgendes umfasst:
- A) Erhitzen einer unvernetzten Kautschukzusammensetzung, die Folgendes enthält:
einen wasserstoffhaltigen Fluorkautschuk;
ein thermisches Vernetzungsmittel, das den wasserstoffhaltigen Fluorkautschuk vernetzt, wenn es auf eine vorbestimmte Temperatur erhitzt wird; wobei das thermische Vernetzungsmittel ein Peroxid ist; und
ein Wasserstoffschutzmittel, das an Kohlenstoffradikale bindet, die sich aus dem Bruch von Kohlenwasserstoffbindungen des wasserstoffhaltigen Fluorkautschuks ergeben, der unter Bestrahlung auftritt, wobei das Wasserstoffschutzmittel eine Verbindung mit einem Perfluorskelett mit einer Alkenylgruppe enthält, die an den Kohlenstoffradikal des wasserstoffhaltigen Fluorkautschuks in seinem Molekül bindet, und eine Verbindung mit einem Siloxanskelett mit einer Alkenylgruppe, die an einen Kohlenstoffradikal des wasserstoffhaltigen Fluorkautschuks in seinem Molekül bindet, bei der vorbestimmten Temperatur, um den wasserstoffhaltigen Fluorkautschuk durch das thermische Vernetzungsmittel zu vernetzen,
- B) Bestrahlen der in Schritt A) erhaltenen Kautschukzusammensetzung, so dass das Wasserstoffschutzmittel an die Kohlenstoffradikale bindet, die sich aus dem Bruch der Kohlenstoffwasserstoffbindungen des fluorkautschukhaltigen Wasserstoffs ergeben, um das Kautschukprodukt zu erhalten.

2. Verfahren nach Anspruch 1, wobei der Gehalt des Wasserstoffschutzmittels 1 Massenteil oder mehr und 20 Massenteile oder weniger pro 100 Massenteile des wasserstoffhaltigen Fluorkautschuks beträgt.

3. Verfahren nach einem der Ansprüche 1-2, wobei das thermische Vernetzungsmittel 2,5-Dimethyl-2,5-di(t-Butylperoxy)hexan enthält.

4. Verfahren nach einem der Ansprüche 1 bis 3, wobei der Gehalt des thermischen Vernetzungsmittels 0,5 Massenteile oder mehr und 2,5 Massenteile oder weniger pro 100 Massenteile des wasserstoffhaltigen Fluorkautschuks beträgt.

5. Verfahren nach einem der Ansprüche 1 bis 4, wobei das Verhältnis des Gehalts des Wasserstoffschutzmittel zum Gehalt des thermischen Vernetzungsmittels 2,5 oder mehr und 30 oder weniger beträgt.

6. Verfahren nach einem der Ansprüche 1 bis 5, wobei die unvernetzte Kautschukzusammensetzung ferner Folgendes enthält:
eine Vernetzungshilfe, die an den wasserstoffhaltigen Fluorkautschuk bindet, so dass sie sich zwischen Molekülen des wasserstoffhaltigen Fluorkautschuks befindet, wenn der wasserstoffhaltige Fluorkautschuk durch das thermische Vernetzungsmittel vernetzt wird.

7. Verfahren nach Anspruch 6, wobei die Vernetzungshilfe TriallylIsocyanurat enthält.

8. Verfahren nach Anspruch 6 oder 7, wobei der Gehalt der Vernetzungshilfe 1 Massenteil oder mehr und 10 Massenteile oder weniger pro 100 Massenteile des wasserstoffhaltigen Fluorkautschuks beträgt.

## Revendications

1. Procédé de fabrication d'un produit en caoutchouc comprenant :
- A) le chauffage d'une composition de caoutchouc non réticulée contenant :
un caoutchouc fluoré contenant de l'hydrogène ;
un agent de réticulation thermique qui réticule le caoutchouc fluoré contenant de l'hydrogène lorsqu'il est chauffé à une température prédéterminée ; dans lequel ledit agent de réticulation thermique est un peroxyde ; et
un agent de protection de site d'hydrogène qui se lie aux radicaux de carbone résultant de la rupture des liaisons carbone-hydrogène du caoutchouc fluoré contenant de l'hydrogène qui se produit sous irradiation, dans lequel ledit agent de protection de site d'hydrogène contient un composé avec un squelette perfluoré ayant un groupe alcényle qui se lie au radical de carbone du caoutchouc fluoré contenant de l'hydrogène dans sa molécule et un composé avec un squelette siloxane ayant un groupe alcényle qui se lie à un radical de carbone du caoutchouc fluoré contenant de l'hydrogène dans sa molécule, à ladite température prédéterminée pour réticuler le caoutchouc fluoré contenant de l'hydrogène par l'agent de réticulation thermique,
- B) l'irradiation de la composition de caoutchouc obtenue à l'étape A) de sorte que l'agent de protection de site d'hydrogène se lie aux radicaux de carbone résultant de la rupture des liaisons carbone-hydrogène du caoutchouc fluoré contenant de l'hydrogène afin d'obtenir le produit en caoutchouc.

2. Procédé de la revendication 1, dans lequel la teneur en agent de protection de site d'hydrogène est supérieure ou égale à 1 partie en masse et inférieure ou égale à 20 parties en masse pour 100 parties en masse du caoutchouc fluoré contenant de l'hydrogène.

3. Procédé de l'une quelconque des revendications 1 et 2, dans lequel l'agent de réticulation thermique contient du 2,5-diméthyl-2,5-di(t-butylperoxy)hexane.

4. Procédé de l'une quelconque des revendications 1 à 3, dans lequel la teneur en agent de réticulation thermique est supérieure ou égale à 0,5 partie en masse et inférieure ou égale à 2,5 parties en masse pour 100 parties en masse du caoutchouc fluoré contenant de l'hydrogène.

5. Procédé de l'une quelconque des revendications 1 à 4, dans lequel le rapport entre la teneur en agent de protection de site d'hydrogène et la teneur en agent de réticulation thermique est supérieur ou égal à 2,5 et inférieur ou égal à 30.

6. Procédé de l'une quelconque des revendications 1 à 5, dans lequel la composition de caoutchouc non réticulée contient en outre :
un adjuvant de réticulation qui se lie au caoutchouc fluoré contenant de l'hydrogène de manière à être situé entre les molécules du caoutchouc fluoré contenant de l'hydrogène lorsque le caoutchouc fluoré contenant de l'hydrogène est réticulé par l'agent de réticulation thermique.

7. Procédé de la revendication 6, dans lequel l'adjuvant de réticulation contient de l'isocyanurate de triallyle.

8. Procédé de la revendication 6 ou 7, dans lequel la teneur en adjuvant de réticulation est supérieure ou égale à 1 partie en masse et inférieure ou égale à 10 parties en masse pour 100 parties en masse du caoutchouc fluoré contenant de l'hydrogène.
